# EUROPÄISCHE PATENTANMELDUNG

(11) **EP 1 413 478 A1**
(43) Veröffentlichungstag der Anmeldung: **28.04.2004**
(21) Anmeldenummer: 03024464.4
(22) Anmeldetag: 23.10.2003
(51) Int. Cl.: B60P 3/00, B60P 7/10, B60P 7/135

(54) **Haltevorrichtung für den Transport von Glasscheiben und dergleichen**

(30) Priorität: 24.10.2002 DE 20216434 U
(71) Anmelder: Langendorf GmbH, 45731 Waltrop (DE)
(72) Erfinder: Langendorf, Heinrich, 45731 Waltrop (DE)
(74) Vertreter: GROSSE BOCKHORNI SCHUMACHER

(57) **Zusammenfassung**

Bei einer Haltevorrichtung für den Transport von Glasscheiben, die sich einzeln und/oder paketweise im stehenden Zustand, insbesondere je Einheit größenmäßig unterschiedlich hintereinander gemeinsam an einer oder mehreren Stützflächen abstützen, weist die Haltevorrichtung in ihrem oberen Bereich als Transportsicherung mindestens ein an die Glasscheiben bzw. die Glasscheibe anschwenkbares Andrückelement (8) auf und/oder ist im unteren Bereich mindestens ein weiteres Andrückelement (5) vorgesehen, welches verschiebbar, insbesondere höhenverschiebbar angeordnet ist.

## Beschreibung

Die Erfindung betrifft eine Haltevorrichtung für den Transport von Glasscheiben und dergleichen gemäß dem Oberbegriff des Patentanspruchs 1.

Für den Transport von großflächigen Glasscheiben auf der Straße werden üblicherweise spezielle Lastfahrzeuge, insbesondere mit einem sogenannten Auflieger verwendet. Hierbei sind die Glasscheiben paketartig auf dem Auflieger angeordnet, und zwar auf dem Auflieger stehend gegen eine schräge Stützfläche gelehnt. Um ein Verrutschen der Glasscheiben während des Transportes zu vermeiden, sind spezielle Haltevorrichtungen vorgesehen, die üblicherweise eine großflächige Halteplatte aufweisen, die durch einen Antrieb gegen das jeweilige Glasscheibenpaket angelegt bzw. leicht angedrückt wird. Derartige Halteplatten sind dabei mit einem elastischen Belag, wie Gummi oder Schaumstoff, versehen, um ein Verkratzen der außen liegenden Scheiben zu verhindern.

Es hat sich nun gezeigt, dass in zunehmendem Maße immer mehr großflächige Dünngläser transportiert werden müssen, deren Glasdicke vielfach < 2mm beträgt, wodurch sich die Glasbruchgefahr besonders beim Transport auf der Straße nicht unwesentlich erhöht.

Ferner kommt es beim Glastransport mit den genannten Spezialfahrzeugen immer häufiger zu sogenannten Mischladungen, bei denen Scheiben mit relativ großen Abmessungen, z.B. 3,21 m hoch, mit solchen, die ein geteiltes Bandmaß aufweisen, z.B. mit einer Höhe bis maximal 2,6 m, gepaart werden, d.h., dabei werden die größten Glasscheiben direkt an die Stützfläche eines hierfür vorgesehenen sogenannten Gestellbocks gelehnt und die Glasscheiben mit den geringeren Abmaßen davor gestellt.

Aufgabe der vorliegenden Erfindung ist es, eine Haltevorrichtung für Glasscheiben beim Straßentransport zu schaffen, mit der sowohl ein Auffächern und/oder Beulen beim Transport von Dünngläsern verhindert werden kann, als auch ein bruchfreier Transport von Mischladungen von Glasscheiben gewährleistet ist, bei denen jede Glaseinheit größenmäßig unterschiedlich ist, die Einheiten jedoch hintereinander gemeinsam sich an einer oder mehreren Stützflächen abstützen.

Diese Aufgabe wird erfindungsgemäß in einfacher Weise durch die im kennzeichnenden Teil des Paentanspruchs 1 enthaltenen Merkmale gelöst, wobei zweckmäßige Weiterbildungen durch die jeweiligen Unteransprüche gekennzeichnet sind.

Durch die erfindungsgemäßen Merkmale des kennzeichnenden Teils des Patentanspruchs 1, einerseits bei der Haltevorrichtung in ihrem oberen Bereich als Transportsicherung mindestens ein an die Glasscheiben bzw. die Glasscheibe anschwenkbares Andrückelement vorzusehen, und andererseits, im unteren Bereich mindestens ein weiteres Andrückelement anzuordnen, welches insbesondere höhenverschiebbar ist, wird vor allem zweierlei erreicht: Zum einen können damit insbesondere Dünngläser bruchsicherer transportiert werden, indem bei Ruhestellung des oberen Andrückelements das im unteren Bereich der Haltevorrichtung vorgesehene Andrückelement teleskopartig nach unten verfahren bzw. gezogen wird, wodurch der Anpressdruck der gesamten Haltevorrichtung auf eine größere Spannweite verteilt wird, wodurch ein Auffächern und ein Beulen der Gläser verhindert wird, und zum anderen wird beim Transport von kombinierten Ladungen, sogenannten Mischladungen, bei denen z.B. zuerst große Scheiben und dann kleinere Scheiben hintereinander geladen werden, das im oberen Bereich befindliche Andrückelement bis zu den hinteren, höheren Glasscheiben ausgefahren, d.h. angedrückt und somit das Auffächern dieser Glasscheiben ebenfalls verhindert.

Zuvor wird natürlich die gesamte Haltevorrichtung insgesamt erst einmal an die Glasscheiben angeschwenkt, wozu diese dazu ausgebildet ist, bevor dann - im Fall einer Mischladung - das im oberen Bereich der Haltevorrichtung vorgesehene Andrückelement an den hinteren Glasscheibenstapel angeschwenkt wird, um diesen zusätzlich im oberen Bereich festzuhalten.

Damit das Andrücken zum Festhalten der Glasscheiben nicht punktförmig erfolgt, sondern mehr flächig und damit schonender, sollten sämtliche Andrückelemente als Querbalken ausgebildet sein, die zweckmäßigerweise an zwei Konsolen angelenkt sind.

Das Schwenken des im oberen Bereich der Haltevorrichtung vorgesehenen Andrückelemente erfolgt vorteilhaft mittels eines Schubkolbengetriebes oder eines Spindeltriebs, wobei das Verschieben des unteren Andrückelements ebenfalls mit Hilfe eines entsprechenden Antriebs teleskopartig erfolgen kann. Dazu ist dieses mittels ineinander verschiebbarer Profile geführt.

Beim Transport von nur einer Glasscheibensorte, z.B. Dünngläser, ist es vorteilhaft, dass sich sowohl das ausschwenkbare Andrückelement im eingeschwenkten Zustand als auch das höhenverschiebbare untere Andrückelement in einer gleichen Ebene angeordnet sind, so dass eine flächige Anlage an die äußere Glasscheibe erfolgen kann.

Um diese flächige bzw. streifenförmige Anlage flächenmäßig zu erhöhen, damit ein möglichst geringer Druck pro Flächeneinheit auf die äußere Glasscheibe einwirkt, ist es ferner zweckmäßig, dass zwischen dem oberen anschwenkbaren und dem unteren höhenverschiebbaren Andrückelement weitere mit den Konsolen der Haltevorrichtung fest verbundene Abstützelemente, die praktischerweise auch als Querbalken ausgebildet sind und zwingend sich auch in der gleichen Ebene wie die übrigen Andrückelemente befinden, damit eine flächige Anlage an den Scheiben gewährleistet ist.

Insbesondere kommen diese mittleren Andrückelemente auch bei einer Mischladung zum tragen, indem diese an dem oberen Ende des niedrigeren Glasscheibenstapels anliegen und diesen dort festhalten.

Schließlich ist es zweckmäßig, sämtliche Andrückelemente jeweils mit einer elastischen Andrückfläche auszurüsten, und zwar aus Gummi, Schaumstoff oder dergleichen, damit Transportstöße leicht durch diese abgefangen werden können und die Gläser nicht zu Bruch gehen.

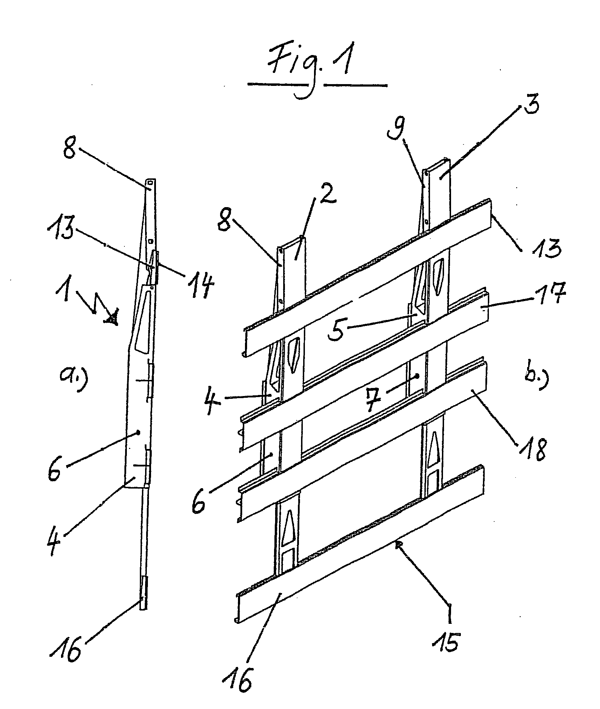

Weitere Einzelheiten und Vorteile der Erfindung werden nachfolgend durch ein Ausführungsbeispiel anhand der beigefügten Zeichnung näher erläutert und beschrieben. Darin zeigt
- Fig. 1 a.): eine schematische Seitenansicht der Haltevorrichtung nach der Erfindung im Ausgangszustand des im oberen Bereich vorgesehenen Andrückelements sowie im ausgefahrenen Zustand des im unteren Bereich angeordneten Andrückelements,
- Fig. 1 b.): eine perspektivische, schematische Ansicht der Haltevorrichtung nach Fig. 1 a.)
- Fig. 2 a.): eine schematische Seitenansicht der Haltevorrichtung gemäß Fig. 1 a.), jedoch mit ausgeschwenktem oberen Andrückelement und

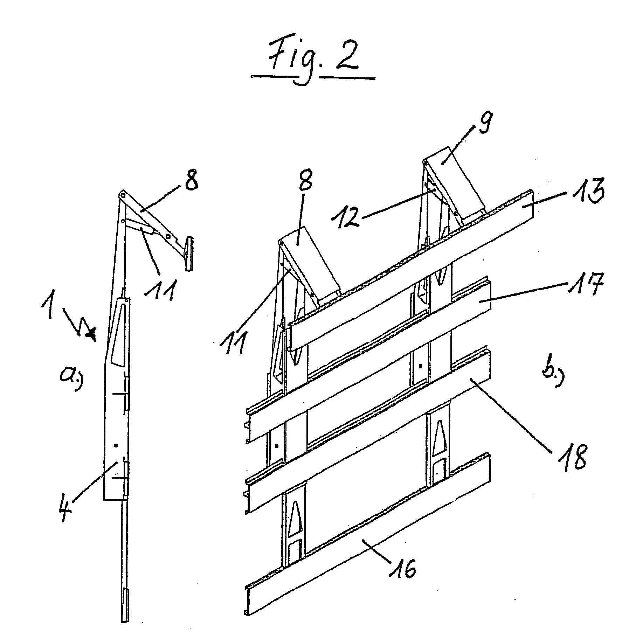

- Fig. 2 b..): eine perspektivische, schematische Ansicht der Haltevorrichtung nach Fig. 2 a.).

Für den Transport von großflächigen Glasscheiben im Straßenverkehr werden bekanntlich spezielle LKW's, insbesondere solche mit einem Auflieger verwendet, auf denen die Glasscheiben überwiegend paketweise, also in Stapeln aus mehreren aneinander angeordneten Scheiben, stehend gegen eine Schrägfläche als Stützfläche geneigt gestellt werden.

Zur Halterung dieser Glasscheibenpakete während des Transports im Straßenverkehr werden sogenannte Haltevorrichtungen verwendet, von denen ein Ausführungsbeispiel in den Fig. 1 und 2 dargestellt ist. Die in Fig. 1 bei a.) schematisch dargestellte Seitenansicht zeigt lediglich den zum eigentlichen Festhalten der Glasscheiben dienenden Halteteil der nicht näher dargestellten gesamten Haltevorrichtung. Dieses Halteteil, insgesamt mit 1 bezeichnet, besitzt zwei parallel zueinander angeordnete Konsolen 2 und 3, welche jeweils durch Joche 4 und 5 rückseitig verstärkt sind, an welche das Halteteil 1 über einen nicht dargestellten Parallelogrammlenker, der z.B. mittels eines Schubkolbens verschwenkt werden kann, angelenkt ist, um das Halteteil 1 an den zu sichernden Glasstapel anzulegen. Die entsprechende Drehgelenkachse ist bei 6 und 7 angedeutet.

Im oberen Bereich der Konsolen 2 und 3 des Halteteils 1 sind jeweils schwenkbare Andrückelemente 8 und 9 angelenkt, die jeweils über Schubkolben 11 und 12 (Fig. 2 a.) und b.) ) betätigbar sind. Beide Andrückelemente 8 und 9 sind mit einem Querbalken 13 miteinander verbunden, der eine elastische Andrückfläche 14 besitzt.

Im unteren Bereich der Konsolen 2 und 3 des Halteglieds 1 ist ein höhenverschiebbares Andrückelement 15 vorgesehen, das als ein teleskopartig höhenverstellbarer Querbalken 16 ausgebildet ist, dessen Führung durch ineinander verschiebbare - hier nicht näher dargestellte - Profile erfolgt. In den Fig. 1 und 2 ist der höhenverstellbare Querbalken 16 jeweils in seiner ausgefahrenen Stellung gezeigt.

Zwischen dem oberen Andrückelement 13 und dem unteren Andrückelement 15 sind noch zwei fest mit den Konsolen 2 und 3 verbundene mittlere Andrückelemente 17 und 18 vorgesehen, die mit den Andrückelementen 13 und 14 in einer Ebene liegen und ebenfalls als Querbalken ausgebildet sind. Selbstverständlich sind alle Andrückelemente mit einer elastischen Andrückfläche versehen, wie sie bei 14 angedeutet ist und aus Gummi oder Schaumstoff bestehen kann.

Soll nun ein Stapel von Glasscheiben im Straßenverkehr transportiert werden und hier z.B. ein Stapel aus Dünnglasscheiben, so wird - nach dem die Scheiben im Fahrzeug an die dort befindliche Stützfläche gestellt worden sind - das Halteteil 1 der Haltevorrichtung im Zustand gemäß Fig. 1 a.), d.h. mit zurückgefahrenem oberen Querbalken 13 und ausgefahrenem unteren Querbalken 16, mit Hilfe des nicht dargestellten Parallellenkers soweit zur Außenfläche des Glasstapels geschwenkt, bis das Halteteil 1 satt mit seinen Querbalken 13 und 16 - 18 an der äußersten Glasscheibe anliegt und damit den gesamten Stapel auch bei Erschütterungen beim Fahren in seiner Lage festhält.

Bei einer derartigen Verwendung des Halteteils 1 kommt vor allem zum Tragen, dass der Querbalken 16 nach unten verschoben werden kann, wodurch sich die Spannweite der zur Verfügung stehenden Andruckfläche in einfacher Weise vergrößert, so dass insbesondere ein Ausbeulen der Dünnglasscheiben dadurch verhindert wird.

Auf der anderen Seite ist das Halteteil 1 der Haltevorrichtung Dank der Erfindung auch bestens für einen Transport von sogenannten Mischladungen geeignet. Bei diesen kombinierten Ladungen werden die Glasscheibenpakete in abgestufter Größe an die Stützwand gestellt, wobei dann der Stapel mit den größten Scheiben zuerst an die Stützwand gestellt wird und das Paket mit den demgegenüber niedrigen Scheiben sich daran anschließt.

An dieses im Querschnitt stufenförmige Gesamtpaket legt sich das Halteglied dann derart an, dass die oberen Andrückelemente 8 und 9 mit Hilfe der Schubkolben 11 und 12 - entsprechend der Darstellung in Fig. 2 a.) und b.) - mit seinem Querbalken 13 über den Stapel mit den niedrigeren Scheiben hinweg an das obere Ende des zurückliegenden Stapels mit den größeren Scheiben angedrückt wird, wodurch insbesondere ein Auffächern verhindert wird. Gleichzeitig wird der vorderste Stapel mit den niedrigeren Scheiben durch die an diesen anliegenden mittleren Querbalken 17 und 18 an seiner Oberseite und durch den ausgefahrenen Querbalken 16 an seiner unteren festgehalten, so dass hier auch kein Auffächern während der Fahrt im Straßenverkehr erfolgen kann. Diese Multifunktion der erfindungsgemäßen Haltevorrichtung erlaubt daher vorteilhaft einen vielfältigen Einsatz, wodurch man letzten Endes Zeit und Kosten einspart.

## Patentansprüche

1. Haltevorrichtung für den Transport von Glasscheiben, die sich einzeln und/oder paketweise im stehenden Zustand, insbesondere je Einheit größenmäßig unterschiedlich hintereinander gemeinsam an einer oder mehreren Stützflächen abstützen, **dadurch gekennzeichnet, dass** die Haltevorrichtung in ihrem oberen Bereich als Transportsicherung mindestens ein an die Glasscheiben bzw. die Glasscheibe anschwenkbares Andrückelement (8) aufweist und/oder dass im unteren Bereich mindestens ein weiteres Andrückelement (15) vorgesehen ist, welches verschiebbar, insbesondere höhenverschiebbar angeordnet ist.

2. Haltevorrichtung nach Anspruch 1, **dadurch gekennzeichnet, dass** diese insgesamt an die Glasscheiben bzw. die Glasscheibe anschwenkbar ausgebildet ist.

3. Haltevorrichtung nach Anspruch 1 oder 2, **dadurch gekennzeichnet, dass** das im oberen Bereich der Haltevorrichtung vorgesehene schwenkbare Andrückelement (8;9) als einoder mehrfach angelenkter Querbalken (13) ausgebildet ist.

4. Haltevorrichtung nach Anspruch 3, **dadurch gekennzeichnet, dass** für das obere anschwenkbare Andrückelement (13) mindestens ein Antrieb in der Form eines Schubkolbengetriebes (11) oder eines Spindeltriebs vorgesehen ist.

5. Haltevorrichtung nach einem der vorhergehenden Ansprüche, **dadurch gekennzeichnet, dass** das im unteren Bereich vorgesehene Andrückelement (15) teleskopartig höhenverstellbar ausgebildet ist.

6. Haltevorrichtung nach Anspruch 5, **dadurch gekennzeichnet, dass** das im unteren Bereich vorgesehene Andrückelement (15) als ein- oder mehrfach angelenkter Querbalken (16) ausgebildet ist.

7. Haltevorrichtung nach Anspruch 6, **dadurch gekennzeichnet, dass** der Querbalken (16) des im unteren Bereich höhenverschiebbar vorgesehenen Andrückelements (15) an mindestens zwei Konsolen (2,3) geführt ist.

8. Haltevorrichtung nach Anspruch 7, **dadurch gekennzeichnet, dass** die Führung des im unteren Bereich vorgesehenen Querbalkens (16) als ineinander verschiebbare Profile ausgebildet ist.

9. Haltevorrichtung nach einem der vorhergehenden Ansprüche, **dadurch gekennzeichnet, dass** das anschwenkbare Andrückelement (8;9) an den gleichen Konsolen(2,3) wie das untere Andrückelement (15) angeordnet ist und sich im eingeschwenkten Zustand in der gleichen Ebene wie das untere höhenverschiebbare Andrückelement (15) befindet.

10. Haltevorrichtung nach Anspruch 9, **dadurch gekennzeichnet, dass** das obere anschwenkbare Andrückelement (8;9) parallel zu dem unteren höhenverschiebbaren Andrückelement (15) angeordnet ist.

11. Haltevorrichtung nach einem der vorhergehenden Ansprüche, **dadurch gekennzeichnet, dass** das untere höhenverschiebbare Andrückelement (15) mittels eines an dieses angelenkten Antriebs verschiebbar ist.

12. Haltevorrichtung nach einem der vorhergehenden Ansprüche, **dadurch gekennzeichnet, dass** zwischen dem oberen anschwenkbaren und dem unteren höhenverschiebbaren Andrückelement (8;9 bzw. 15) ein weiteres mit den Konsolen fest verbundenes Abstützelement (17;18) vorgesehen ist, das sich in der gleichen Ebene wie das untere höhenverstellbare Andrückelement (15) befindet.

13. Haltevorrichtung nach Anspruch 12, **dadurch gekennzeichnet, dass** das feste mittlere Andrückelement (17;18) ebenfalls entsprechend den benachbarten Andrückelementen als Querbalken ausgebildet ist.

14. Haltevorrichtung nach einem der vorhergehenden Ansprüche, **dadurch gekennzeichnet, dass** die Querbalken (13,16-18) jeweils eine elastische Andrückfläche (14) aus Gummi, Schaumstoff oder dergleichen aufweisen.
